(19) Europäisches Patentamt
European Patent Office
Office européen des brevets

(11) Veröffentlichungsnummer: **0 135 831**
**B1**

(12) # EUROPÄISCHE PATENTSCHRIFT

(45) Veröffentlichungstag der Patentschrift: **29.07.87**

(51) Int. Cl.[4]: **C 08 G 18/38**, C 08 G 18/14, C 08 G 18/65

(21) Anmeldenummer: **84110238.7**

(22) Anmeldetag: **29.08.84**

(54) **Verwendung von Polyhydroxyalkyl-polycarbonamiden zur Herstellung flammgeschützter Polyurethan-Hartschaum- und Integralschaumstoffe.**

(30) Priorität: **10.09.83 DE 3332792**

(43) Veröffentlichungstag der Anmeldung: **03.04.85 Patentblatt 85/14**

(45) Bekanntmachung des Hinweises auf die Patenterteilung: **29.07.87 Patentblatt 87/31**

(84) Benannte Vertragsstaaten: **BE DE FR GB IT**

(56) Entgegenhaltungen:
**EP-A- 0 068 281**
**FR-A- 1 533 694**
**FR-E- 95 267**

(73) Patentinhaber: **BAYER AG**
**Konzernverwaltung RP Patentabteilung**
**D-5090 Leverkusen 1 Bayerwerk (DE)**

(72) Erfinder: **Haas, Peter, Dr.**
**Zwengenberger Strasse 43**
**D-5657 Haan (DE)**
Erfinder: **Avar, Geza, Dr.**
**Bamberger Strasse 1**
**D-5090 Leverkusen (DE)**
Erfinder: **Grammes, Hartwig, Ing. grad.**
**Reuterstrasse 14**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 135 831 B1

Jouve, 18, rue St-Denis, 75001 Paris, France

**Beschreibung**

Gegenstand der Erfindung ist die Verwendung von Poly-N,N-di(hydroxyalkyl)-polycarbonamiden aliphatischer oder cycloaliphatischer Polycarbonsäuren als einbaufähige Flammschutzmittel für harte Polyurethanschaumstoffe, insbesondere Polyurethan-Integralschaumstoffe und Polyurethan-Hartschaumstoffe, welche mit organischen Treibmitteln hergestellt werden, durch Zusatz in Mengen von 11,5 bis 50, besonders bevorzugt 12 bis 25 Gew.-Teilen der einbaufähigen Flammschutzmittel bezogen auf 100 Teile des höhermolekularen Polyols, welches zur Herstellung der Polyurethanschaumstoffe zum Einsatz kommt. Die entstehenden Integral- oder Hartschaumstoffe sind flammgeschützt und bestehen durch ihr reduziertes Brennvermögen verschiedene vorgeschriebene Brandtests, insbesondere solche, wobei die Verwendung der erfindungsgemäßen Schaumstoffe in Verkehrsmitteln ermöglichen.

Für den Einsatz von Polyurethanschaumstoffen ist eine weitgehende Resistenz gegenüber einer Entflammung für bestimmte Anwendungen von ausschlaggebender Bedeutung. Dies äußert sich in Normen zur Entflammbarkeit, die, abhängig vom jeweiligen Verwendungszweck, Unterschiede aufweisen können und oft auf spezielle Gesichtspunkte ausgerichtet sind. In diesem Zusammenhang sind der MVSS-302-Test, der Bundesbahn-Test, der Lufthansa-Test (FAR 25 853) sowie der Kleinbrenner-Test nach DIN 53 438 zu sehen.

In diesem Zusammenhang auftretende Fragen zur Verwendung von Polyurethankunststoffen mit entsprechenden Anforderungen sind mit größter Aufmerksamkeit bearbeitet worden, was aus der Vielzahl des bisher vorliegenden Schrifttums zu diesem Thema zu ersehen ist.

Technisch von Interesse sind vor allem in Polyurethankunststoffen die Ester von Phosphor enthaltenden Säuren und deren Derivate, sowie Halogenverbindungen, insbesondere Verbindungen des Broms. An Flammschutzmitteln ist hier mit an erster Stelle Trichlorethylphosphat, dessen höhere Homologe und Trikresylphosphat, Derivate der Aminomethylphosphonsäureester, Tris-(2,3-dibrompropyl)-phosphat sowie Brom enthaltende Buten-höhermolekulare Oxiranaddukte zu nennen ; aber auch Melamin oder seine Phosphorsäurederivate sind bekannte Flammschutzzusätze.

Aus der DE-A-1 745 134 ist die Herstellung von Schaumstoffen unter Verwendung von 2 bis 4 Hydroxylgruppen aufweisenden Estern oder Amiden zwei- oder mehrwertiger, einkerniger aromatischer Säuren mit einem Molekulargewicht unter 400, gegebenenfalls in Abmischung mit zusätzlichen Amid- und Estergruppen-freien, ein Äquivalentgewicht unter 200 und eine Funktionalität von 2 bis 8 aufweisenden Polyolen bekannt. Derartige Amide der aromatischen Polycarbonsäuren stellen jedoch hochviskose oder glasartige Massen dar, welche sich nicht gut in Polyolen lösen oder dispergieren lassen und nur gegebenenfalls in Wasser als Treibmittel enthaltenden Schaumstoff-Formulierungen noch hinreichend verteilt werden können.

In der AT-A 29 44 29 wird die Verwendung von u. a. Bis-(β-hydroxyalkyl)-diamiden von aliphatischen Dicarbonsäuren, welche an den Hydroxylgruppen erschöpfend oder teilweise propoxyliert sind, zur Herstellung von harten und halbharten Polyurethanschaumstoffen beschrieben.

Die Verwendung der bisher eingesetzten Flammschutzmittel ist jedoch aus mehreren Gründen mit Nachteilen behaftet. Neben physiologischer Bedenken vor allem bei β-Halogenestern des Phosphors ist die oft unzureichende Stabilität gegen Hydrolyse dieser Substanzklassen als nachteilig bekannt geworden. Dies ist für die Verarbeiter der Polyurethanausgangskomponenten besonders unangenehm, da ja bekanntlich die Additionsreaktion durch tertiäre Aminogruppen enthaltende Verbindungen katalysiert wird. Wegen dieser, im basischen Bereich noch gesteigerten Instabilität der verwendeten Flammschutzmittel sind Formulierungen der Rohstoffe nur begrenzt lagerfähig. Mitunter werden sogar aus diesem Grunde in unmittelbar vor der Verarbeitung frisch hergestellten Formulierungen solche Aktivitätsveränderungen im Bereich mehrerer Stunden festgestellt. In der Regel ist dies dann nur noch schwer zu korrigieren ; die hergestellten Teile entfallen als Ausschuß, da eine Nachkatalyse problemreich ist. Neben den bislang geschilderten, gewichtigen Nachteile der verwendeten Flammschutzmittel ist noch deren Weichmacherwirkung zu nennen. Sie macht sich durch eine erhebliche Erniedrigung in der Wärmestandfestigkeit bemerkbar. Hinzu kommt durch die Flüchtigkeit der verwendeten Verbindungen ein Wirkungsverlust im Verlaufe der Zeit hinzu. Dieses Diffusionsvermögen äußert sich in Automobilen z. B. als wiederholt auftretende Abscheidung auf Glasflächen, vor allem der Windschutzscheiben (Fogging).

Aufgabe der vorliegenden Erfindung war es, einbaufähige Verbindungen mit flammschützender Wirkung zur Verwendung als einbaufähiges Flammschutzmittel für Polyurethanhartschaumstoffe zur Verfügung zu stellen, welche die geschilderten Nachteile der Technik, nämlich mangelnde Löslichkeit bzw. Dispergierbarkeit in den Ausgangsmaterialien der Polyurethanschaumstoffherstellung, mangelnde Lagerbeständigkeit der mit Flammschutzmitteln ausgerüsteten Rohstoffmischung,

weichmachende Effekte des Flammschutzmittels,

schlechte Wärmestandfestigkeit des Schaumstoffs durch die Zusatzmittel,

Diffusionseffekte und Ausschwitzen des Flammschutzmittels, mithin also Wirkungsminderung und ferner eine Freisetzung von Halogenwasserstoff bei Totalbränden,

nicht zeigen.

Völlig überraschend sind hierzu die phosphor- und bromfreien, einbaufähigen Poly-N,N-di(hydroxyalkyl)-amide mehrwertiger aliphatischer und cycloaliphatischer Carbonsäuren gemäß der Formel

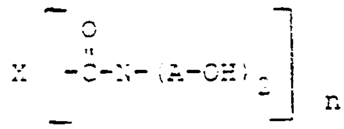

hervorragend geeignet, wobei

n eine ganze Zahl von 2 bis 6, bevorzugt von 2 bis 4, ist,

X eine Bindung (bei n = 2), ein n-wertiger Alkanrest, vorzugsweise ein $C_1$-$C_{10}$-geradkettiger oder verzweigter, gegebenenfalls hydroxylgruppensubstituierter Alkanrest besonders bevorzugt ein $C_1$-$C_4$-Alkanrest, ein $C_4$-$C_6$-Cycloalkanrest, der im Ring gegebenenfalls Heteroatome wie O oder Heteroatomgruppierungen wie N-Alkyl, vorzugsweise N-$CH_3$ enthält, ist, und

A eine geradkettige oder verzweigte, gegebenenfalls eine OH-Gruppen aufweisende $C_2$-$C_6$-Alkylengruppe, vorzugsweise eine Ethylengruppe und/oder eine 1,2- und/oder 1,3-Propylengruppe, besonders bevorzugt eine Ethylengruppe, darstellt.

X ist beispielsweise eine Bindung (n = 2) oder bevorzugt ein $C_1$-$C_4$-Alkylenrest (n = 2) z. B.

ein 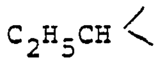 -Rest (n = 2)

ein 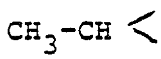 -Rest (n = 2)

ein 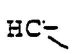 -Rest (n = 3)

ein 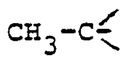 -Rest (n = 3)

ein 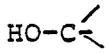 -Rest (n = 3)

ein 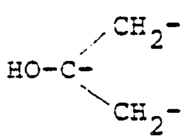 -Rest (n = 3)

ein 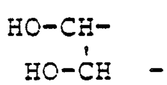 -Rest (n = 3)

ein 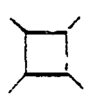 -Rest (n = 4)

ein 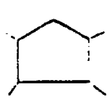 -Rest (n = 4)

ein 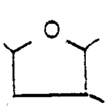 -Rest (n = 4).

Ihre Synthese erfolgt zweckmäßig nach der in der EP-A-0 068 281 beschriebenen Art durch Umsetzung der Polycarbonsäurealkyl-ester der Formel

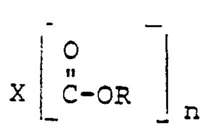 ,

wobei X und n die bereits angeführte Bedeutung haben und R einen Alkylrest, beispielsweise einen $C_1$-$C_{10}$- (vorzugsweise $C_1$- bis $C_4$-Alkylrest) darstellt, mit Dialkanolaminen der Formel $HN(A—OH)_2$, wobei A

die oben angeführte Bedeutung hat, bei erhöhten Temperaturen (50 bis 200 °C, vorzugsweise 70 bis 150 °C) unter Abdestillieren der abgespaltenen Hydroxylkomponente ROH aus dem Reaktionsgemisch. Entsprechende Produkte sind auch aus Chem. Abstr., 81, 37268-s (1974) bekanntgeworden.

Gegenstand der Erfindung ist somit die Verwendung der aliphatischen Polyhydroxyalkylamid-Verbindungen als einbaufähige Flammschutzmittel zur Herstellung von flammwidrigen Polyurethanhartschaumstoffen einschließlich -Integralschaumstoffen durch Umsetzung von mindestens 2, gegenüber Isocyanaten reaktionsfähige Wasserstoffatome aufweisenden, höhermolekularen Verbindungen, vorzugsweise höhermolekularen Polyolen, vom Molekulargewicht 400 bis 10 000 mit Polyisocyanaten und gegebenenfalls Kettenverlängerungsmitteln vom Molekulargewicht 32 bis 399 gegebenenfalls in Gegenwart von Katalysatoren und üblichen Zusatzstoffen organischen Treibmitteln, wobei man

als einbaufähige Flammschutzmittel die erfindungsgemäßen Poly-N,N-di(hydroxyalkyl)-amide mehrwertiger aliphatischer oder cycloaliphatischer Carbonsäuren der Formel

$$X\left[\overset{O}{\overset{\|}{C}}-N(A-OH)_2\right]_n ,$$

wobei X, A, n die bereits beschriebene Bedeutungen haben, in Mengen von 11,5 bis 50, bevorzugt 12 bis 35, besonders bevorzugt 12 bis 25 Gewichts-Teilen, bezogen auf 100 Gewichts-Teile der gegenüber Isocyanaten reaktionsfähige Wasserstoffatome aufweisenden, höhermolekularen Verbindungen, verwendet.

Bei den erfindungsgemäß einzusetzenden Verbindungen handelt es sich um am Amidstickstoff vollständig hydroxyalkylierte, und somit polyfunktionell einbaufähige Derivate von Amiden mehrwertiger aliphatischer oder cycloaliphatischer Carbonsäuren, wobei selbstverständlich auch deren Gemische eingesetzt werden können.

Beispiele sind :

$$(HO-CH_2-CH_2)_2N-\overset{O}{\overset{\|}{C}}-\overset{O}{\overset{\|}{C}}-N(CH_2-CH_2-OH)_2$$ besonders bevorzugt

$$(HO-CH_2-CH_2)_2N-\overset{O}{\overset{\|}{C}}-CH_2-\overset{O}{\overset{\|}{C}}-N(CH_2-CH_2-OH)_2$$ besonders bevorzugt

$$(HO-\underset{CH_3}{\underset{|}{C}H}-CH_2)_2-N-\overset{O}{\overset{\|}{C}}-CH_2-\overset{O}{\overset{\|}{C}}-N(CH_2-\underset{CH_3}{\underset{|}{C}H}-OH)_2$$ besonders bevorzugt

$$(HO-CH_2-CH_2)_2N-\overset{O}{\overset{\|}{C}}-(CH_2)_2-\overset{O}{\overset{\|}{C}}-N(CH_2-CH_2-OH)_2$$ bevorzugt

$$(HO-CH_2-CH_2)_2N-\overset{O}{\overset{\|}{C}}-(CH_2)_4-\overset{O}{\overset{\|}{C}}-N(CH_2-CH_2-OH)_2$$ bevorzugt

$$(HO-CH_2-CH_2)_2N-\overset{O}{\overset{\|}{C}}-\overset{C_2H_5}{\overset{|}{C}H}-\overset{O}{\overset{\|}{C}}-N(CH_2-CH_2-OH)_2$$ bevorzugt

$$HC\left[\overset{O}{\overset{\|}{C}}N(CH_2-CH_2-OH)_2\right]_3$$

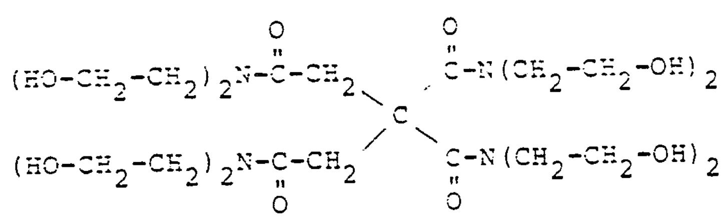

(Fortsetzung)

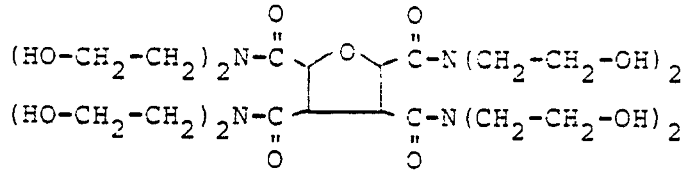

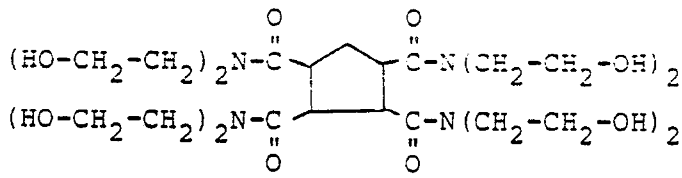

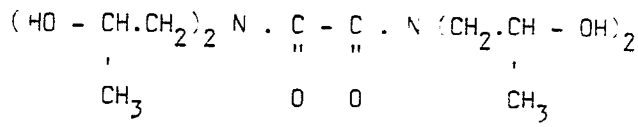

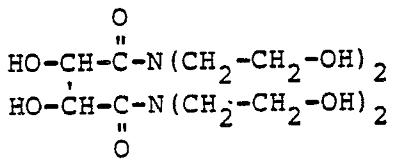

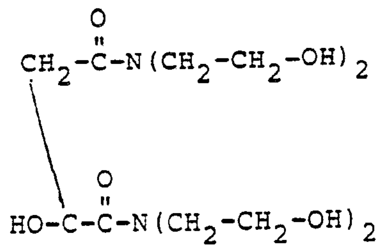

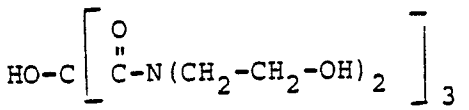

,

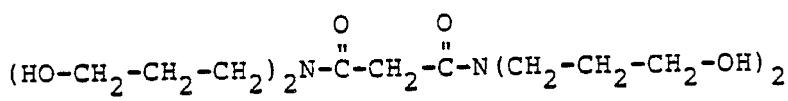

Innerhalb der erfindungsgemäßen Stoffklasse werden die Malon-, Bernstein- und Adipinsäuretetrahydroxyalkylamide bevorzugt als Flammschutzmittel verwendet, wobei die Hydroxyethylgruppen enthaltenden Amide besonders bevorzugt sind.

Die Wirkung als Flammschutzmittel scheint an das Vorhandensein von mindestens zwei Amidgruppen gebunden zu sein. So zeigt nämlich das Formamidderivat

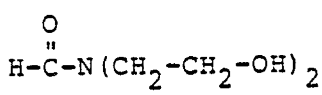

keine vergleichbare Wirkung.

Die Verbindungsklasse der aliphatischen Bis-N,N-di(hydroxyalkyl) amide mehrwertiger aliphatischer oder cycloaliphatischer Polycarbonsäuren selbst wurde als Komponente in hochelastischen Polyurethanschaumstoffen in Mengen bis 10 % Zusatz schon beschrieben. In durch Wasser getriebenen, hochelastischen Schaumstoffen aus Polyolen und vorzugsweise modifizierten Polyisocyanaten bewirken diese Verbindungen nach der EP-A-68 281 eine Öffnung der Schaumstoffzellen. Besonders ausgeprägt war diese Wirkung bei Biuret-, Allophanat- oder Isocyanurat-Gruppen enthaltenden Polyisocyanaten. Wie das Vergleichsbeispiel 13c) der EP-A-68 281 lehrt, wird die Grenze der Zusatzmenge an Zellöffner vom Typ der Polyhydroxyalkylcarbonamide für die Herstellung hochelastischer, wassergetriebener Polyurethanschaumstoffe aufgezeigt. Bei Verwendung von 11 Teilen der Polyhydroxyalkylamide in der Weichschaumrezeptur mit Wasser als Treibmittel ist die Zellöffnung so stark ausgeprägt, daß sich eine stabile Zellstruktur nicht mehr bildet. Daher ist die Zusatzmenge stets so klein zu wählen, daß man unter den Bedingungen bleibt, die zum Totalkollaps führen. Überraschenderweise hat sich nunmehr gezeigt, daß man gerade bei hohen Zusatzmengen an Polyhydroxyalkylamiden, welche über der maximalen Zusatzmenge bei Weichschaumstoffen liegen, harte Polyurethanschaumstoffe aufbauen kann, ohne daß es zu einer Kollapswirkung durch die Zusatzstoffe kommt. Die erfindungsgemäßen Hartschaumstoffe werden ganz besonders vorteilhaft dann erhalten, wenn organische Treibmittel anstelle von Wasser als Treibmittel Verwendung finden. Weiterhin hat sich die hervorragende Flammschutzwirkung der aliphatischen und cycloaliphatischen Polyhydroxyalkylcarbonamide in diesen, gegenüber der EP-A-68 281 erhöhten Anwendungsmengen herausgestellt.

Die bevorzugte Verwendung der erfindungsgemäßen Verbindungsklasse als Flammschutzmittel erfolgt bei Polyurethanhartschaumstoffen, sowie Integral-Hartschaumstoffen, welche bei Verwendung

der organischen Treibmittel ohne Zusatz von Wasser als Treibmittel die für einen Flammschutzeffekt notwendigen hohen Zusatzmengen der Polyhydroxyalkylamide überraschenderweise vertragen.

Als bevorzugte Komponenten zur Schaumstoffherstellung finden unter den Isocyanaten verflüssigte Modifikationen auf der Basis von Diphenylmethandiisocyanaten Verwendung, wie sie durch Umsetzung des Diisocyanatodiphenylmethans mit kleinen Mengen an nieder- und/oder höhermolekularen Di- und Polyhydroxyverbindungen hergestellt werden.

Als Treibmittel werden Halogenderivate niederer Kohlenwasserstoffe, z. B. Trichlormonofluormethan, Methylenchlorid, 1,1,2-Trifluor-1,2,2-trichlorethan, 1,1,2,2-Tetrafluor-1,2-dichlorethan oder Gemische aus diesen üblichen Treibmitteln verwendet.

Während in Integralschaumstoffen unterschiedlicher Härte primäre OH-Gruppen enthaltende Polyhydroxyalkylcarbonsäureamide bevorzugt sind, eignen sich sekundäre Hydroxylgruppen enthaltende Carbonamide aus Verträglichkeitsgründen besonders für die Verwendung in Hartschaumstoffen.

Zur Herstellung von Polyurethan-Hart- und/oder-Integral-Schaumstoffen unter Mitverwendung der erfindungsgemäßen Flammschutzmittel werden als schaumstoffbildende Ausgangsmaterialien eingesetzt :

1. Verbindungen mit mindestens zwei gegenüber Isocyanaten reaktionsfähigen Wasserstoffatomen von einem Molekulargewicht von 400 bis 10 000. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 800 bis 6 000, vorzugsweise 1 500 bis 4 000, vorzugsweise aber 2 bis 4 Hydroxylgruppen aufweisende Polyester, Polyether, Polythioether, Polyacetale, Polycarbonate und Polyesteramide, wie sie für die Herstellung von homogenen und zellförmigen Polyurethanen an sich bekannt sind und wie sie z. B. in der DE-A-2 832 253, Seiten 11 bis 18, beschrieben werden. Besonders bevorzugt sind Polyether, die durch Addition von einem oder mehreren Alkylenoxiden (Ethylenoxid und besonders Propylenoxid) an zwei- oder mehrwertige « Starter »), Propylenglykol, Glycerin, Sorbit, Formose, Triethanolamin, Ethylendiamin, Trimethylolpropan und Sucrose erhalten werden, sowie Polyether, welche Polyadditionsprodukte aus Diisocyanaten und Hydrazin und/oder Diaminen und/oder Glykolen oder Polymerisate und/oder Pfropfpolymerisate, vorzugsweise aus Styrol und Acrylnitril dispergiert oder gelöst enthalten.

2. Gegebenenfalls werden als Ausgangsmaterialien Verbindungen mit mindestens 2 gegenüber Isocyanaten reaktionsfähigen Wasserstoffatomen und einem Molekulargewicht von 32 bis 399, vorzugsweise 62-254, mitverwendet. Auch in diesem Fall versteht man hierunter Hydroxylgruppen und/oder Aminogruppen und/oder Thiolgruppen und/oder Carboxylgruppen und/oder Hydrazidgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele werden hierfür in der DE-A-2 832 253, Seiten 19-20, beschrieben. Genannt seien Hydrazin, Ethylenglykol, Butandiol-1,4, Trimethylolpropan, Formit-Gemische oder Adipinsäuredihydrazid. Bevorzugt sind Di- und/oder Polyole mit Molekulargewichten von 62 bis 254.

3. Aliphatische, cycloaliphatische, araliphatische, heterocyclische und besonders aromatische Polyisocyanate, wie sie z. B. von W. Siefken in Justus Liebigs Annalen der Chemie, 562, Seiten 75-136, beschrieben werden, beispielsweise solche der Formel Q $(NCO)_n$, in der n = 2 bis 4, vorzugsweise 2 und Q einen aliphatischen Kohlenwasserstoffrest mit 2 bis 18, vorzugsweise 6 bis 12 C-Atomen, einen cycloaliphatischen Kohlenwasserstoffrest mit 4 bis 20, vorzugsweise 5 bis 11 C-Atomen, einen aromatischen Kohlenwasserstoffrest mit 6 bis 20, vorzugsweise 6 bis 13 C-Atomen, oder einen araliphatischen Kohlenwasserstoffrest mit 8 bis 15, vorzugsweise 8 bis 13 C-Atomen bedeuten, z. B. solche Polyisocyanate wie sie in der DE-A 2 832 253, Seiten 10 bis 11 beschrieben werden.

Besonders bevorzugt werden die technisch leicht zugänglichen Polyisocyanate, z. B. das 2,4- und/oder 2,6-Toluylendiisocyanat, sowie beliebige Gemische dieser Isomeren (« TDI »), Diphenylmethandiisocyanate (4,4'- und/oder 2,4'- und/oder 2,2'-Isomere), Polyphenyl-polymethylenpolyisocyanate, wie sie durch Anilin-Formaldehyd-Kondensation und anschließende Phosgenierung hergestellt werden (« rohes MDI ») und « modifizierte Polyisocyanate », die z. B. Carbodiimidgruppen, Urethangruppen, Allophanatgruppen, Isocyanuratgruppen, Harnstoffgruppen und/oder Biuretgruppen aufweisen diese sind jedoch weniger bevorzugt ; insbesondere solche modifizierten Polyisocyanate, die sich von 2,4- und/oder 2,6-Toluylendiisocyanat und bevorzugt vom 4,4'- und/oder 2,4'-Diphenylmethandiisocyanat ableiten. Gegebenenfalls werden Hilfs- und Zusatzmittel wie leichtflüchtige anorganische oder organische Substanzen als Treibmittel, Katalysatoren der an sich bekannten Art, wie tertiäre Amine, Zinn-(II)- und Zinn-(IV)-Verbindungen, oberflächenaktive Zusatzstoffe, Reaktionsverzögerer, z. B. sauer reagierende Stoffe wie Salzsäure oder organische Säurehalogenide oder Säure, ferner Zellregler der an sich bekannten Art wie Paraffine, Fettalkohole oder Dimethylpolysiloxane sowie Pigmente oder Farbstoffe der an sich bekannten Art, ferner Stabilisatoren gegen Alterungs-, Licht- und Witterungseinflüsse, Weichmacher und fungistatisch und bakteriostatisch wirkende Substanzen, sowie Füllstoffe zugesetzt. Diese gegebenenfalls mitzuverwendenden Hilfs- und Zusatzstoffe werden beispielsweise in der DE-A-2 732-

292, Seiten 21 bis 24 ausführlich beschrieben. Weitere Beispiele der Hilfs- und Zusatzmittel werden im Kunststoffhandbuch, Band VII, herausgegeben von Vieweg und Hoechtlen, Carl-Hanser-Verlag, München 1966, auf den Seiten 102-113 beschrieben.

Die erfindungsgemäß verwendeten, einbaufähigen, als Flammschutzmittel wirkenden Poly-N,N-di(hydroxyalkyl)-amide der mindestens bifunktionellen aliphatischen und/oder cycloaliphatischen Carbonsäuren werden üblicherweise mit der höhermolekularen Polyolverbindung in den angegebenen Mengen vermischt. Das Gemisch kann weiterhin die üblichen Zusatz- und Hilfsstoffe enthalten. Die Schaumstoffherstellung erfolgt in der üblichen Weise, technisch unter Zuhilfenahme von maschinellen Dosier- und Fördereinrichtungen. Hauptanwendungsgebiet ist die Herstellung von halbharten und harten Integralschaumstoffen sowie Hartschaumstoffen.

Anwendungen der erhältlichen Produkte sind insbesondere dort, wo flammgeschützte Schaumstoffe vorgeschrieben oder erwünscht sind z. B. Integralschaumstoffe für die Ausrüstung von Verkehrsmitteln und Hartschaumstoffe für Isolationsanwendungen.

Die besondere Eignung der mit den erfindungsgemäßen Flammschutzmitteln ausgerüsteten Polyurethanschaumstoffe für die Ausrüstung von Verkehrsmitteln wird durch spezielle Prüfmethoden nachgewiesen, und zwar durch MVSS 302, Bundesbahntest und Lufthansatest. Hierauf wird im anwendungstechnischen Teil ausführlich eingegangen. Die erfindungsgemäßen Flammschutzmittel zeigen für sich alleine gute Wirksamkeit. Ihre Verwendung ist jedoch auch in Kombination mit üblichen Flammschutzmitteln möglich.

Zwar ist im Beispiel 18 der DE-A-1 745 134 der Vertreter eines aromatischen Carbonamides,

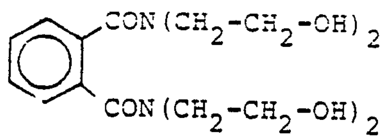

als ausschließliche Polyolkomponente bei der Herstellung von Polyurethanhartschaumstoffen genannt. Die Verbindung selbst ist hochviskos und erstarrt beim Erkalten glasartig ; sie ist daher für eine Verarbeitung in Polyurethanschaumstoffen denkbar wenig geeignet.

In diesem Zusammenhang ist es umso überraschender, daß rein aliphatische Vertreter der erfindungsgemäß zu verwendenden Verbindungen hervorragende Flammschutzeffekte bewirken, dies bei guter Verarbeitbarkeit in flüssiger Form, guter Dispergierbarkeit in den Polyolen, ohne Kollabierwirkung und Zellöffnungswirkung, sowie gegenüber dem Beispiel 18 der genannten Offenlegungsschrift in wesentlich niedrigeren Zusatzmengen, wie in Tabelle 1 unserer Anmeldung belegt ist.

Die erfindungsgemäß verwendeten, einbaufähigen Flammschutzmittel lassen sich auch zum Aufbau von Integralschaumstoffen mit gewissen Rückfederungseigenschaften, wie sie z. B. in Lenkrädern, Seitenteilen, Nackenstützen, Türaußen- und Türinnenverkleidungen von Automobilen vorhanden sein müssen verwenden.

## Experimenteller Teil

### A) Herstellung der Poly-bis-(N,N-hydroxyalkyl)-carbonamide

#### Verbindung 1

Die Herstellung der Verbindungen 1 bis 12 erfolgt entsprechend den Vorschriften, wie sie in der DE-A-3 124 885 gegeben sind (vgl. Tabelle 1).

Beispielhaft wird die Herstellung der Verbindung 1) beschrieben :

$$(HO-CH_2-CH_2)_2N-\overset{O}{\overset{\|}{C}}-\overset{O}{\overset{\|}{C}}-N(CH_2-CH_2-OH)_2$$

Zu 146 g (1 Mol) Oxalsäurediethylester werden 210 g (2 Mol) Diethanolamin getropft, wobei die Temperatur auf 90 °C steigt und Ethanol fast quantitativ abdestilliert ; man behandelt im Vakuum und erhält 264 g (quant.) an Tetra-hydroxyethyloxalsäureamid ; Visk. bei 80 °C 1 100 mPas, OH-Zahl 850 ;

(Siehe Tabelle 1 Seite 8 ff.)

Tabelle 1 Herstellung der Poly-(N,N-bis-hydroxyalkyl)-carbonamide

| Bsp. Nr. | Verbindung | OH-Zahl | Bsp.-Nr. nach DE-A-3 124 885 |
|---|---|---|---|
| 1 | $(HO-CH_2-CH_2)_2N-\overset{O}{\overset{\|}{C}}-\overset{O}{\overset{\|}{C}}N(CH_2-CH_2-OH)_2$ | 850 | 1 |
| 2 | $(HO-CH_2-CH_2)_2N-\overset{O}{\overset{\|}{C}}-CH_2-\overset{O}{\overset{\|}{C}}N(CH_2-CH_2-OH)_2$ | 800 | 2 |
| 3 | $(HO-CH_2-CH_2)_2N-\overset{O}{\overset{\|}{C}}-(CH_2)_4-\overset{O}{\overset{\|}{C}}N(CH_2-CH_2-OH)_2$ | 700 | 3 |
| 4 | $(HO-CH_2-CH_2)_2N-\overset{O}{\overset{\|}{C}}-(CH_2)_{10}-\overset{O}{\overset{\|}{C}}N(CH_2-CH_2-OH)_2$ | 540 | 4 |
| 5 | $HC\left[\overset{O}{\overset{\|}{C}}N(CH_2-CH_2-OH)_2\right]_3$ | 910 | 5 |
| 6 | $[(HO-CH_2-CH_2)_2N-\overset{O}{\overset{\|}{C}}]_2\ C[CH_2-\overset{O}{\overset{\|}{C}}-N(CH_2-CH_2-OH)_2]_2$ | 800 | 6 |

Tabelle 1 (Fortsetzung)

| Bsp. Nr. | Verbindung | OH-Zahl | Bsp.-Nr. nach DE-A-3 124 885 |
|---|---|---|---|
| 7 | 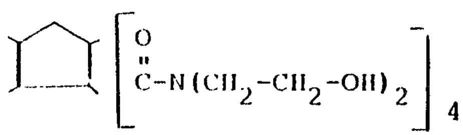 | 750 | 7 |
| 8 | 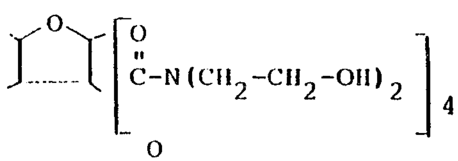 | 750 | 8 |
| 9 | 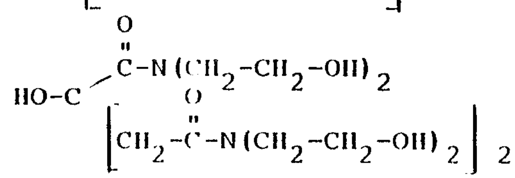 | 860 | 9 |
| 10 | 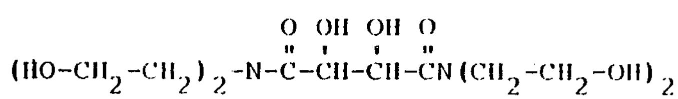 | 1040 | 10 |
| 11 | 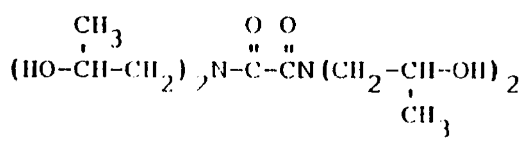 | 675 | 11 |
| 12 | 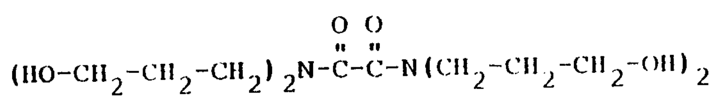 | 670 | 12 |

Verbindung 13

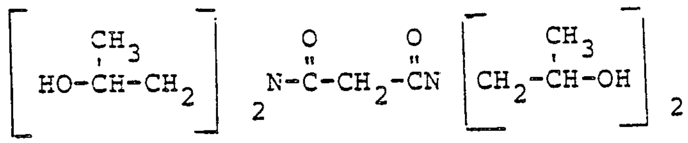

$C_{15}H_{30}N_2O_6$ (334)

Gemäß Vorschrift für Verbindung 1 aus 264 g (2 m) Malonsäuredimethylester und 532 g (4 m) Diisopropanolamin ; Ausbeute 653 g ; OH-Zahl : 660, ber. : 670 ; (m = Mol).

Verbindung 14

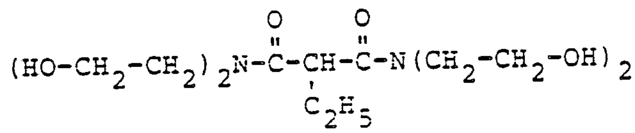

$C_{13}H_{26}N_2O_6$ (306)

Gemäß Vorschrift 1 aus 160 g (1 m) Ethylmalonsäuredimethylester und 210 g (2 m) Diethanolamin ; Ausbeute 304 g ; OH-Zahl : 720 ; ber. : 732 ;

Verbindung 15

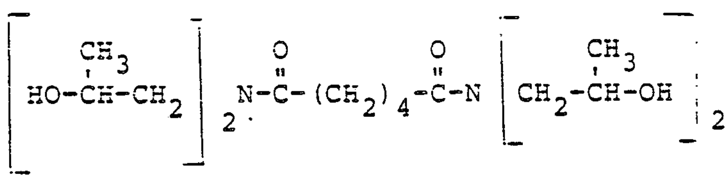

$C_{18}H_{36}N_2O_6$ (376)

Gemäß Vorschrift 1 aus 261 g (1,5 m) Adipinsäuredimethylester und 399 g (3 m) Diisopropanolamin ; Ausbeute 565 g, OH-Zahl : 580, ber. : 595.

ber. : C 57,5, H 9,5, N 7,4 ;

gef. . C 58,1, H 8,5, N 7,4 ;

B) Verwendung zur Herstellung von Integral- bzw. Hartschaumstoffen

In allen Beispielen wurde die folgende Grundrezeptur verwendet ; die jeweiligen Flammschutzkomponenten sind in der Tabelle 2 aufgeführt :

Die Polyolgrundkomponente des Gemischs bestand aus :

100 Gew.-Teilen eines trifunktionellen Polyetherpolyols der OH-Zahl 35, welches durch Alkoxylierung von Trimethylolpropan unter Verwendung von Propylenoxid und anschließendes Aufpfropfen von ca. 15 %, bezogen auf die Gesamtmenge an Ethylenoxid hergestellt worden war,

9 Gew.-Teilen Ethylenglykol,

0,4 Gew.-Teilen Diazabicyclooctan (33 %ig in Diisopropanol, « 33 LV » Produkt der Houdry/Hüls in Marl, D-4370) und

14 Gew.-Teilen Trichlorofluormethan.

Die Polyisocyanatkomponente bestand aus der in der Tabelle angegebenen Menge eines mit Dipropylenglykol modifizierten, flüssigen, im wesentlichen bifunktionellen Polyisocyanatsgemischs der Diphenylmethanreihe mit einem NCO-Gehalt von 28 % und einer Viskosität bei 25 °C von 130 mPa · s.

Es wurden jeweils 100 Teile der Dispersion der Polyhydroxyalkylamide in der Polyolgrundkomponente mit der jeweils in Tabelle 2 angegebenen Isocyanatmenge verschäumt.

Die Polyolgrundkomponente wird mit den jeweiligen, Flammschutzkomponenten vom Typ der am Stickstoff per-hydroxyalkylierten Polyhydroxyalkylpolycarbonamide in den in der Tabelle 2 angegebenen Mengen bei Raumtemperatur verrührt. Es werden dabei leicht trübe Dispersionen der Polyhydroxyalkylpolycarbonsäureamide in den Polyolen erhalten, welche eine hinreichende Stabilität (Standzeiten bis zu mehreren Monaten) aufweisen.

(Siehe Tabelle 2 Seite 11 ff.)

Die Herstellung der Prüfkörper erfolgte manuell mit Laborrührer (1 450 $min^{-1}$) durch Vermischung der Komponenten. Die Formen für die Integralschaumstoffteile waren auf 40 ± 2 °C temperiert. Das Einzelgewicht wurde so gewählt, daß die Rohdichte der Formteils 300 $kg/m^3$ betrug ; Entformungszeit nach 5 Minuten. Bei zu starker Abweichung der Reaktionszeiten vom Standard wurde entsprechend der Tabelle 2 nachaktiviert.

C) Prüfung des Brandverhaltens

Fast alle Brennbarkeitstests sind an Risikoaspekten bestimmter Anwendungen orientiert. Für die verschiedenen Anwendungsgebiete existieren daher unterschiedliche Prüfverfahren, die zu Ergebnissen

Tabelle 2 Rezeptur zum Aufbau und Brandverhalten von durch Einbau der Polyhydroxyalkylcarbonamide modifizierten PU-Integralschaumstoffe

a)

| Flammschutzmittel (FSM) | Menge FSM in Gew.-Teilen | Polyolgrund-komponente in Gew.-Teilen | Zusatz FSM (in Teilen) auf 100 Teilen höhermolekulares Polyol | Isocyanatmengen in Gew.-Teilen | Nachaktivierung mit 33 LV |
|---|---|---|---|---|---|
| Tris-(chlorethyl)-phosphat (Vergleich) | 15 | 85 | 14,2 | 43 | - |
| Verbindung 1 | 15 | 85 | 21,8 | 64 | 0,3 |
| Verbindung 2 | 15 | 85 | 21,8 | 63 | 0,3 |
| Verbindung 13 | 15 | 85 | 21,8 | 59 | 0,5 |
| Verbindung 14 | 15 | 85 | 21,8 | 61 | - |
| Verbindung 3 | 20 | 80 | 29,1 | 64 | 1,5 |

*) Wesentlich höhere Mengen an Tris-(chlorethyl)-phosphat (Vergleich) können wegen zu hoher Weichmacherwirkung den Schaumstoffen nicht sinnvoll zugesetzt werden.

Tabelle 2 (Fortsetzung)

b) Brandverhalten

| Flammschutzmittel | MVSS 302 Klassifizierung (mm) | FAR 25853 vertikal zerstörte Probenlänge | Nachbrennzeit (sec) | Tropfenbrennzeit | bestanden | Bundesbahntest DV 899/35 Brennbarkeitsgrad | Tropfbarkeitsgrad |
|---|---|---|---|---|---|---|---|
| Tris-(chlorethyl)-phosphat (Vergleich) | SE | 45 | 32 | 15 | nein | B 3 | T 1 |
| Verbindung 1 | SE | 55 | 5 | 10 | ja | B 3 | T 1 |
| Verbindung 2 | SE | 45 | 0 | 0 | ja | B 3 | T 1 |
| Verbindung 13 | SE | 47 | 0 | 0 | ja | B 3 | T 1 |
| Verbindung 14 | SE | 35 | 0 | 0 | ja | B 3 | T 1 |
| Verbindung 3 | Se | 40 | 0 | 0 | ja | B 3 | T 1 |

führen, welche miteinander nur bedingt vergleichbar sind. Entsprechend der Verwendung der Polyurethanschaumstoffe wurden für die Untersuchung der Wirksamkeit der Flammschutzmittel drei Brandtests ausgewählt.

a) Prüfvorschrift für Kfz-Innenausstattung gemäß DIN 75 200, entspricht den Federal Motor Vehicle Safety Standards (MVSS) 302 der USA
b) Brennbarkeits-Test der Bundesbahn
c) Brandverhalten von Luftfahrt-Werkstoffen : Federal Aviation Regulations (FAR) 25853 (USA).

Die Ausmaße und Anzahl der Prüfkörper, die Probenanordnung, die Durchführung der Prüfung und die dabei zu erfüllende Forderung ist in der folgenden Aufstellung stichwortartig zusammengefaßt.

a) MVSS 302 (Docket 3-3) (DIN 75 200)
Prüfkörper :
3 Platten 350 × 100 × 13 mm
Meßmarken bei 38, 254 und 312 mm
Probenanordnung : horizontal
Beflammungsdauer : 15 sec
Bestimmung der Brandgeschwindigkeit v zwischen der 2. und 3. Markierung.
Forderung : v ≤ 100 mm/min
Klassifizierung :
SE (selbstlöschend), SE/NBR (keine Brenngeschwindigkeit, Probe verlöscht innerhalb 60 sec), BR (brennend, Geschw. wird angegeben).

b) Bundesbahn-Test DV 899/35
Prüfkörper : 3 Platten 300 × 100 × 30 mm
Probenanordnung : vertikal
Beflammungsdauer : 3 min

Bestimmung des Brennbarkeitsgrades (% verbrannte Fläche)
B 4 : nicht brennbar
B3 : schwer entflammbar, bis 75 % verbrannte Fläche
B2 : brennbar, 76-90 % verbrannte Fläche
B1 : leicht brennbar, 91-100 % verbrannte Fläche

Bestimmung des Tropfbarkeitsgrades
T 4 : verformt und erweicht nicht, bildet keine Tropfen
T3 : verformt stark, erweicht oder bildet Fäden
T2 : tropft nichtbrennend ab
T 1 : tropft brennend ab und brennt weiter

Bestimmung des Qualmentwicklungsgrades
Q 4 : qualmt nur sehr wenig, 10 % Sichttrübung
Q 3 : qualmt und rußt mäßig, 11-40 % Sichttrübung
Q 2 : qualmt und rußt stark, 41-70 % Sichttrübung
Q 1 : qualmt und rußt sehr stark, 71-100 % Sichttrübung

c) Lufthansa-Test FAR 25.853 b
Probenanordnung : horizontal und vertikal
Prüfkörper horizontal : 3 Platten 350 × 100 × 13 mm
vertikal : 3 Platten 350 × 75 × 13 mm
Beflammungsdauer horizontal : 15 sec
vertikal : 12 sec

Geforderte Meßwerte

horizontal : Brenngeschwindigkeit ≤ 63,4 mm/min
vertikal :
Verbrennungslänge ≤ 203 mm
Nachbrennzeit ≤ 13 sec
Tropfenbrennzeit ≤ 5 sec

Die Beispiele zeigen, daß die erfindungsgemäßen Polyhydroxyalkylcarbonamide in den Brennbarkeitskriterien besonders gemäß FAR 25853 b mit der genauen Erfassung von zerstörter Probenlänge, Nachbrennzeit und Tropfenbrennzeit den Ergebnissen üblicher Flammschutzmittel mit den schon geschilderten Nachteilen noch überlegen sind.

Dies geht besonders aus den Beispielen 1, 2, 13, 14, 3 hervor.

**Patentansprüche**

1. Verwendung aliphatischer Polyhydroxyalkylamidverbindungen als einbaufähige Flammschutzmittel zur Herstellung flammwidrigen Polyurethan-Hartschaumstoffen einschließlich-Integralschaumstoffen durch Umsetzung von mindestens 2, gegenüber Isocyanaten reaktionsfähige Wasserstoffatome aufweisenden, höhermolekularen Verbindungen, vorzugsweise höhermolekularen Polyolen, vom Molekulargewicht von 400 bis 10 000 mit Polyisocyanaten und gegebenenfalls Kettenverlängerungsmitteln vom Molekulargewicht 32 bis 399, gegebenenfalls in Gegenwart von Katalysatoren und üblichen Zusatzstoffen und organischen Treibmitteln, dadurch gekennzeichnet, daß man als einbaufähige Flammschutzmittel Poly-N,N-di(hydroxyalkyl)-amide mehrwertiger aliphatischer oder cycloaliphatischer Carbonsäuren der Formel

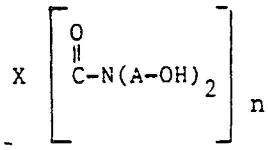

wobei n eine ganze Zahl von 2 bis 6, bevorzugt von 2 bis 4 ist,

X eine Bindung (bei n = 2), ein n-wertiger Alkylenrest vorzugsweise ein $C_1$-$C_{10}$-geradkettiger oder verzweigter, gegebenenfalls hydroxygruppensubstituierter Alkylenrest, besonders bevorzugt ein $C_1$-$C_4$-Alkylenrest, ein $C_4$-$C_6$-Cycloalkylenrest, der im Ring gegebenenfalls Heteroatome wie O oder Heteroatomgruppierungen wie N-Alkyl, vorzugsweise N-$CH_3$, enthält, ist und A eine geradkettige oder verzweigte, gegebenenfalls eine OH-Gruppen aufweisende $C_2$-$C_6$-Alkylengruppe, vorzugsweise eine Ethylengruppe und/oder eine 1,2- und/oder 1,3-Propylengruppe, darstellt, in Mengen von 11,5 bis 50, bevorzugt 12 bis 30 Gewichts-Teilen, bezogen auf 100 Gewichts-Teile der gegenüber Isocyanaten reaktionsfähige Wasserstoffatome aufweisenden, höhermolekularen Verbindungen, verwendet.

2. Verwendung der Poly-N,N-di(hydroxyalkyl)-amide gemäß Anspruch 1 in Mengen von 12 bis 25 Gewichts-Teilen, bezogen auf 100 Gewichts-Teile der gegenüber Isocyanaten reaktionsfähige Wasserstoffatome aufweisenden, höhermolekularen Verbindungen.

3. Verwendung nach Ansprüchen 1 und 2, dadurch gekennzeichnet, daß in den einbaufähigen Flammschutzmitteln der Rest A eine Ethylengruppe und/oder eine 1,2-Propylengruppe darstellt.

4. Verwendung nach Ansprüchen 1 bis 3, dadurch gekennzeichnet, daß die einbaufähigen Flammschutzmittel Oxal-, Malon-, Bernsteinsäure- oder Adipinsäure-Tetrahydroxyalkyl-amide sind.

5. Verwendung nach Ansprüchen 1 bis 4, dadurch gekennzeichnet, daß man als einbaufähiges Flammschutzmittel

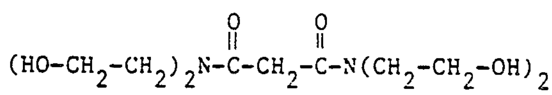

einsetzt.

6. Verwendung nach Ansprüchen 1 bis 4, dadurch gekennzeichnet, daß man als einbaufähiges Flammschutzmittel

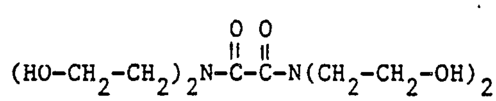

einsetzt.

7. Verwendung nach Ansprüchen 1 bis 4, dadurch gekennzeichnet, daß man als einbaufähiges Flammschutzmittel

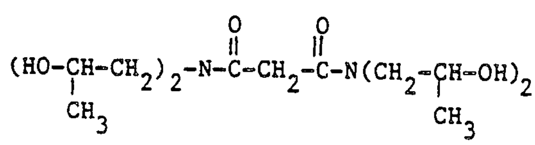

einsetzt.

8. Verwendung von einbaufähigen Flammschutzmitteln nach Ansprüchen 1 bis 7 für Polyurethan-Hart- und Integralschaumstoffe, welche mit organischen Treibmitteln ohne Zusatz von Wasser hergestellt werden.

9. Flammfeste Polyurethan-Hart- und Integralschaumstoffe, welche mit organischen Treibmitteln ohne Zusatz von Wasser und mit Zusatz der einbaufähigen Flammschutzmittel nach Ansprüchen 1 bis 7 und in Mengen von 11,5 bis 50 Gewichts-Teilen bezogen auf 100 Gewichtsteile der gegenüber Isocyanaten reaktionsfähige Wasserstoffatome aufweisenden, höhermolekularen Verbindungen hergestellt wurden.

## Claims

1. Use of aliphatic polyhydroxyalkylamide compounds as incorporable flame-proofing agents for the production of flame-resistant polyurethane rigid foams including polyurethane integral foams by reacting relatively high molecular weight compounds containing at least 2 hydrogen atoms which are reactive towards isocyanates, preferably relatively high molecular weight polyols, having a molecular weight of 400 to 10 000 with polyisocyanates and optionally chain-lengthening agents having a molecular weight of 32 to 399, optionally in the presence of catalysts and customary additives and organic blowing agents, characterised in that poly-N,N-di(hydroxyalkyl)-amides of polybasic aliphatic or cycloaliphatic carboxylic acids of the formula

$$X\left[\overset{O}{\overset{\|}{C}}-N(A-OH)_2\right]_n$$

wherein

n is an integer from 2 to 6, preferably from 2 to 4,

X is a bond (when n = 2), an n-valent alkylene radical, preferably a $C_1$-$C_{10}$ straight-chain or branched, optionally hydroxyl-group-substituted alkylene radical, particularly preferably a $C_1$-$C_4$-alkylene radical, or a $C_4$-$C_6$-cycloalkylene radical which optionally contains hetero atoms such as O or hetero atom groupings such as N-alkyl, preferably N-$CH_3$, in the ring, and

A represents a straight-chain or branched, optionally OH-group-containing $C_2$-$C_6$-alkylene group, preferably an ethylene group and/or a 1,2- and/or 1,3-propylene group,

are used as the incorporable flame-proofing agents, in quantities of 11.5 to 50, preferably 12 to 30 parts by weight, based on 100 parts by weight of the relatively high molecular weight compounds containing hydrogen atoms which are reactive towards isocyanates.

2. Use of the poly-N,N-di(hydroxyalkyl)-amides according to Claim 1 in quantities of 12 to 25 parts by weight, based on 100 parts by weight of the relatively high molecular weight compounds containing hydrogen atoms which are reactive towards isocyanates.

3. Use according to Claims 1 and 2, characterised in that in the radical A in the incorporable flame-proofing agents represents an ethylene group and/or a 1,2-propylene group.

4. Use according to Claims 1 to 3, characterised in that the incorporable flame-proofing agents are oxalic, malonic, succinic acid or adipic acid tetrahydroxyalkylamides.

5. Use according to Claims 1 to 4, characterised in that

$$(HO-CH_2-CH_2)_2N-\overset{O}{\overset{\|}{C}}-CH_2-\overset{O}{\overset{\|}{C}}-N(CH_2-CH_2-OH)_2$$

is used as the incorporable flame-proofing agent.

6. Use according to Claims 1 to 4, characterised in that

$$(HO-CH_2-CH_2)_2N-\overset{O}{\overset{\|}{C}}-\overset{O}{\overset{\|}{C}}-N(CH_2-CH_2-OH)_2$$

is used as the incorporable flame-proofing agent.

7. Use according to Claims 1 to 4, characterised in that

$$(HO-\underset{CH_3}{\underset{|}{C}}H-CH_2)_2-N-\overset{O}{\overset{\|}{C}}-CH_2-\overset{O}{\overset{\|}{C}}-N(CH_2-\underset{CH_3}{\underset{|}{C}}H-OH)_2$$

is used as the incorporable flame-proofing agent.

8. Use of incorporable flame-proofing agents according to Claims 1 to 7 for polyurethane rigid and integral foams which are produced with organic blowing agents without the addition of water.

9. Flameproof polyurethane rigid and integral foams which have been produced with organic blowing agents without the addition of water and with the addition of the incorporable flameproofing agents according to Claims 1 to 7 and in quantities of 11.5 to 50 parts by weight, based on 100 parts by weight of the relatively high molecular weight compounds containing hydrogen atoms which are reactive towards isocyanates.

## Revendications

1. Utilisation de polyhydroxyalkylamides aliphatiques comme agents d'ignifugation, capables d'être incorporés pour préparer des mousses rigides de polyuréthanne résistant à la flamme, y compris des mousses à peau intégrée, par réaction de composés à poids moléculaire élevé présentant au moins 2 atomes d'hydrogène pouvant réagir avec les isocyanates, avantageusement des polyols à poids moléculaire élevé, dont le poids moléculaire se situe entre 400 et 10 000, avec des polyisocyanates et éventuellement des agents d'allongement des chaînes dont le poids moléculaire se situe entre 32 et 399, éventuellement en présence de catalyseurs et d'additifs usuels ainsi que d'agents organiques de moussage, procédé caractérisé en ce que l'on utilise, comme agents d'ignifugation incorporables, des poly-N,N-di-(hydroxyalkyl)amides d'acides polycarboxyliques aliphatiques ou cycloaliphatiques, de formule :

$$X\left[\overset{\overset{O}{\|}}{C}-N(A-OH)_2\right]_n$$

dans laquelle

n est un nombre entier valant 2 à 6, avantageusement 2 à 4,

X représente une liaison (pour n = 2), un reste alkylène de valence n, avantageusement un reste alkylène linéaire ou ramifié en $C_1$-$C_{10}$, éventuellement substitué par des groupes hydroxy, de façon particulièrement préférée un reste alkylène en $C_1$-$C_4$, un reste cycloalkylène en $C_4$-$C_6$ qui contient éventuellement des hétéroatomes comme O ou des groupements comportant des hétéroatomes comme un groupe N-alkyle, avantageusement $N$-$CH_3$, et

A représente un groupe alkylène en $C_2$-$C_6$, linéaire ou ramifié, présentant éventuellement un groupe OH, avantageusement un groupe éthylène et/ou un groupe 1,2-propylène et/ou 1,3-propylène, en des quantités de 11,5 à 50, avantageusement 12 à 30 parties en poids, sur la base de 100 parties en poids des composés à poids moléculaire élevé présentant des atomes d'hydrogène pouvant réagir avec les isocyanates.

2. Utilisation des poly-N,N-di-(hydroxyalkyl)-amides selon la revendication 1, en des quantités de 12 à 25 parties en poids, pour 100 parties en poids des composés à poids moléculaire élevé, présentant des atomes d'hydrogène pouvant réagir avec les isocyanates.

3. Utilisation selon les revendications 1 et 2, caractérisée en ce que, dans l'agent d'ignifugation incorporable, le reste A représente un groupe éthylène et/ou un groupe 1,2-propylène.

4. Utilisation selon les revendications 1 à 3, caractérisée en ce que les agents d'ignifugation incorporables sont des tétrahydroxyalkylamides de l'acide oxalique, de l'acide malonique, de l'acide succinique ou de l'acide adipique.

5. Utilisation selon les revendications 1 à 4, caractérisée en ce qu'on utilise comme agent incorporable d'ignifugation :

$$(HO-CH_2-CH_2)_2N-\overset{\overset{O}{\|}}{C}-CH_2-\overset{\overset{O}{\|}}{C}-N(CH_2-CH_2-OH)_2$$

6. Utilisation suivant les revendications 1 à 4, caractérisée en ce qu'on utilise, comme agent incorporable d'ignifugation :

$$(HO-CH_2-CH_2)_2N-\overset{\overset{O}{\|}}{C}-\overset{\overset{O}{\|}}{C}-N(CH_2-CH_2-OH)_2$$

7. Utilisation selon les revendications 1 à 4, caractérisée en ce qu'on utilise, comme agent incorporable d'ignifugation :

$$(HO-\underset{\underset{CH_3}{|}}{CH}-CH_2)_2-N-\overset{\overset{O}{\|}}{C}-CH_2-\overset{\overset{O}{\|}}{C}-N(CH_2-\underset{\underset{CH_3}{|}}{CH}-OH)_2$$

8. Utilisation d'agents incorporables d'ignifugation selon les revendications 1 à 7 pour des mousses rigides et des mousses à peau intégrée en polyuréthanne, qui ont été préparées à l'aide d'agents organiques de moussage sans addition d'eau.

9. Mousses rigides et mousses à peau intégrée en polyuréthanne résistant à la flamme, qui ont été

préparées à l'aide d'agents organiques de moussage sans addition d'eau et avec addition des agents incorporables d'ignifugation selon les revendications 1 à 7, utilisés en des quantités de 11,5 à 50 parties en poids, pour 100 parties en poids des composés à poids moléculaire élevé présentant des atomes d'hydrogène pouvant réagir avec les isocyanates.